# EUROPEAN PATENT APPLICATION

(11) **EP 3 147 763 A1**
(43) Date of publication of application: **29.03.2017**
(21) Application number: 15197978.8
(22) Date of filing: 04.12.2015
(51) Int. Cl.: G06F 3/041, G06F 3/046

(54) **TOUCH PANEL WITH ANTENNA STRUCTURE**

(30) Priority: 23.09.2015 TW 104131516
(71) Applicant: JTOUCH Corporation, Taoyuan County 32063 (TW)
(72) Inventor: Yeh, Yu-Chou, 32063 Jhongli City, Taoyuan County (TW); Yen, Yu-Hong, 32063 Zhongli Dist., Taoyuan City (TW); Lin, Ting-Ching, 32063 Jhongli City, Taoyuan County (TW); Tsui, Chiu-Cheng, 32063 Jhongli City, Taoyuan County (TW); Chuang, Chia-So, 32063 Zhongli Dist., Taoyuan City (TW)
(74) Representative: 2K Patentanwälte Blasberg Kewitz & Reichel

(57) **Abstract**

A touch panel (1) with an antenna structure is provided. The touch panel (1) includes a transparent substrate (11), a touch sensing circuit (12), plural metal traces (13), a grounding part (14), an insulation film (15), and an antenna radiation unit (16). The transparent substrate (11) is divided into a visible touch zone (10A) and a periphery wiring zone (10B) around the visible touch zone (10A). The touch sensing circuit (12) is included in the visible touch zone (10A). The plural metal traces (13) are included in the periphery wiring zone (10B). The grounding part (14) is included in the periphery wiring zone (10B). A bottom surface (15b) of the insulation film (15) is connected with the periphery wiring zone (10B) of the transparent substrate (11). The antenna radiation unit (16) is disposed on a top surface (15a) of the insulation film (15). At least a portion of the antenna radiation unit (16) is disposed over the grounding part (14), and electrically connected with the grounding part (14).

## Description

### FIELD OF THE INVENTION

The present invention relates to a touch panel, and more particularly to a touch panel with an antenna structure.

### BACKGROUND OF THE INVENTION

Nowadays, touch control technologies are widely applied to touch display devices of various electronic devices in order to facilitate the users to control the operations of the electronic devices. Conventionally, a touch panel comprises a substrate, plural sensing electrodes and plural metal traces. The substrate is divided into a visible touch zone and a periphery wiring zone. The plural sensing electrodes are disposed on the substrate and located at the visible touch zone. The plural metal traces are disposed on the substrate, and located at the periphery wiring zone. The plural metal traces are electrically connected with the corresponding sensing electrodes.

With increasing development of information and communication technologies, electronic devices with wireless communication functions become indispensable devices in the daily lives of people. For example, these electronic devices are mobile phones, tablet computers, portable computers, or the like. Generally, an electronic device with wireless communication function comprises an antenna and a wireless signal processing module. The antenna is used for receiving and transmitting wireless signals. The antenna is externally disposed on a circuit board of the electronic device, disposed within an inner surface of a casing, disposed within an inner surface of a rear cover, or located at a bottom side of a display panel. Recently, the general trends in designing electronic devices are toward small size, light weightiness and high integration levels. Conventionally, for avoiding signal interference, such a electronic device has a clearance region for installing the antenna. The antenna occupies the inner space of the electronic device and affects the inner wiring layout of the electronic device. In other words, the thickness of the electronic device cannot be further reduced. Moreover, the process of installing the conventional antenna is complicated and costly, and the signal interference problem is readily generated. Under this circumstance, the performance of the antenna for receiving and transmitting wireless signals (rf/signals) and the touch sensing performance of the touch panel are adversely affected.

Therefore, there is a need of providing a touch panel with an antenna structure in order to overcome the above drawbacks.

### SUMMARY OF THE INVENTION

It is an object of the present invention to provide an enhanced touch panel with an antenna structure suited to overcome the above drawbacks at least partially and suited in particular to provide an enhanced control performance and an enhanced performance for receiving and transmitting wireless signals. It is a further object of the present invention to provide an enhanced touch panel with an antenna structure that is light weight, enables a reduced thickness and a simplified fabricating process while enabling an enhanced control performance and an enhanced performance for receiving and transmitting wireless signals.

This problem is solved by a touch panel with an antenna structure according to claim 1 and 14, respectively. Further advantageous embodiments are the subject-matter of the dependent claims.

According to the present invention, since the grounding part is disposed on the periphery wiring zone of the transparent substrate to isolate signals, the grounding part can be used as a ground terminal of the antenna radiation unit in order to avoid the signal interference problem. Thus, a touch panel with an antenna structure according to the present invention enables an enhanced touch control performance and an enhanced performance of the antenna radiation unit for receiving and transmitting wireless signals.

According to a further aspect the touch panel of the present invention is light weight and has a reduced thickness, so that the fabricating process can be simplified. Consequently, the touch panel of the present invention can provide an enhanced touch control function and an enhanced function of receiving and transmitting wireless signals without the need of largely increasing the size of the touch panel.

In accordance with an aspect of the present invention, there is provided a touch panel with an antenna structure. The touch panel includes a transparent substrate, a touch sensing circuit, a plurality of metal traces, a grounding part, an insulation film, and an antenna radiation unit. The transparent substrate is divided into a visible touch zone and a periphery wiring zone, wherein the periphery wiring zone is arranged around the visible touch zone. The touch sensing circuit is disposed on the transparent substrate, and included in the visible touch zone. The plural metal traces are disposed on the transparent substrate, and included in the periphery wiring zone, wherein the plural metal traces are electrically connected with the touch sensing circuit. The grounding part is disposed on the transparent substrate, and included in the periphery wiring zone. The insulation film has a top surface and a bottom surface. The bottom surface of the insulation film is connected with the periphery wiring zone of the transparent substrate. The antenna radiation unit is disposed on the top surface of the insulation film. At least a portion of the antenna radiation unit is disposed over the grounding part, and electrically connected with the grounding part.

In accordance with a further aspect of the present invention, there is provided a touch panel with an antenna structure. The touch panel includes a transparent substrate, a touch sensing circuit, a plurality of metal traces, a grounding part, an insulation film, and an antenna radiation unit. The transparent substrate includes a first transparent film and a second transparent film. The transparent substrate is divided into a visible touch zone and a periphery wiring zone. The periphery wiring zone is arranged around the visible touch zone. The touch sensing circuit is disposed on the transparent substrate and included in the visible touch zone. The touch sensing circuit includes plural first sensing electrodes and plural second sensing electrodes. The plural first sensing electrodes are disposed on the first transparent film. The plural second sensing electrodes are disposed on the second transparent film. The plural metal traces are disposed on the transparent substrate and included in the periphery wiring zone. The plural metal traces include plural first metal traces and plural second metal traces. The plural first metal traces are disposed on the first transparent film. The plural second metal traces are disposed on the second transparent film. The plural first metal traces are electrically connected with the plural first sensing electrodes. The plural second metal traces are electrically connected with the plural second sensing electrodes. The grounding part is disposed on the first transparent film, and included in the periphery wiring zone. The insulation film is disposed over the first transparent film. The antenna radiation unit is disposed on a top surface of the insulation film. Moreover, at least a portion of the antenna radiation unit is disposed over the grounding part, and electrically connected with the grounding part. The above contents of the present invention will become more readily apparent to those ordinarily skilled in the art after reviewing the following detailed description and accompanying drawings, in which:

### BRIEF DESCRIPTION OF THE DRAWINGS

- FIG. 1: schematically illustrates a touch panel with an antenna structure according to an embodiment of the present invention;
- FIG. 2: is a schematic exploded view illustrating the touch panel with the antenna structure as shown in FIG. 1;
- FIG. 3A: is a schematic cross-sectional view illustrating the touch panel of FIG. 1 and taken along the line AA;
- FIG. 3B: is a schematic cross-sectional view illustrating the touch panel of FIG. 1 and taken along the line BB;
- FIG. 4: is a flowchart illustrating a method of fabricating the grounding part and the plural first sensing electrodes of the touch panel as shown in FIG. 2;
- FIG. 5: is a flowchart illustrating a method of fabricating the grounding part and the plural first metal traces of the touch panel as shown in FIG. 2;
- FIG. 6: is a schematic cross-sectional view illustrating an example of the electrical connection between the antenna radiation unit and the grounding part of the touch panel as shown in FIG. 2;
- FIG. 7: is a schematic cross-sectional view illustrating another example of the electrical connection between the antenna radiation unit and the grounding part of the touch panel as shown in FIG. 2; and
- FIG. 8: schematically illustrates a touch panel with an antenna structure according to another embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

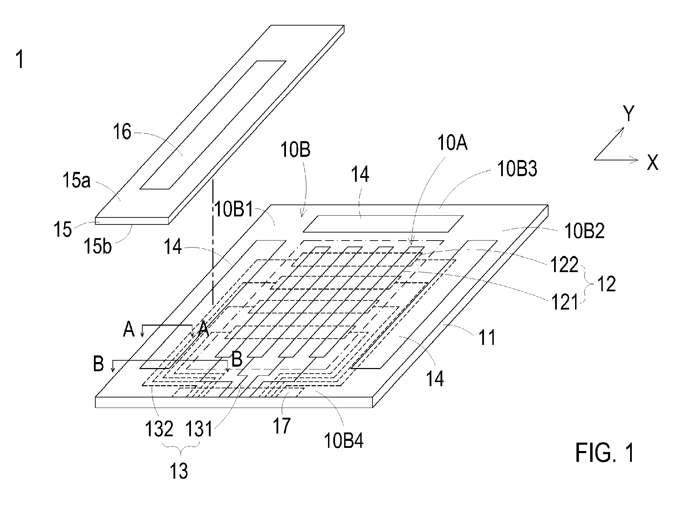

FIG. 1 schematically illustrates a touch panel with an antenna structure according to an embodiment of the present invention. The touch panel 1 of the present invention can be applied to an electronic device with a wireless communication function. The touch panel 1 can provide a touch control function and a function of receiving and transmitting wireless signals. An example of such an electronic device includes but is not limited to a mobile phone, a tablet computer, a portable computer or a wearable electronic device. In this embodiment, the touch panel 1 comprises a transparent substrate 11, a touch sensing circuit 12, plural metal traces 13, a grounding part 14, an insulation film 15 and at least one antenna radiation unit 16. The transparent substrate 11 is divided into a visible touch zone 10A and a periphery wiring zone 10B. The periphery wiring zone 10B is arranged around the visible touch zone 10A. In this embodiment, the transparent substrate 11 comprises at least one layer of flexible or inflexible transparent film. The touch sensing circuit 12 is disposed on the transparent substrate 11, and included in the visible touch zone 10A. Preferably but not exclusively, the touch sensing circuit 12 is a transparent electrode circuit made of indium tin oxide (ITO) or a metal mesh circuit made of metallic conductive material. In this embodiment, the touch sensing circuit 12 comprises plural first sensing electrodes 121 and plural second sensing electrodes 122. The plural first sensing electrodes 121 are extended along a first direction (e.g., a Y-axis direction), and arranged in parallel with each other. The plural second sensing electrodes 122 are extended along a second direction (e.g., an X-axis direction), and arranged in parallel with each other. The plural first sensing electrodes 121 and the plural second sensing electrodes 122 are separated from each other.

The plural metal traces 13 are disposed on the transparent substrate 11, and included in the periphery wiring zone 10B. The plural metal traces 13 are electrically connected with the touch sensing circuit 12. The grounding part 14 is disposed on the transparent substrate 11, and located at the periphery wiring zone 10B. The insulation film 15 has a top surface 15a and a bottom surface 15b. The insulation film 15 is disposed over the periphery wiring zone 10B of the transparent substrate 11. The bottom surface 15b of the insulation film 15 is aligned with the grounding part 14 of the transparent substrate 11. The at least one antenna radiation unit 16 is disposed on the top surface 15a of the insulation film 15. Moreover, at least a portion of the antenna radiation unit 16 is aligned with the grounding part 14 and electrically connected with the grounding part 14. Since the grounding part 14 is included in the periphery wiring zone 10B of the transparent substrate 11, the antenna radiation unit 16 overlying the grounding part 14 and the metal traces 13 and the touch sensing circuit 12 underlying the grounding part 14 can be effectively separated from each other. Moreover, the grounding part 14 can be used as a ground terminal of the antenna radiation unit 16 in order to avoid the signal interference problem. Under this circumstance, the touch control performance of the touch panel 1 will be increased, and the performance of the antenna radiation unit 16 to receive and transmit the wireless signals will be enhanced.

In this embodiment, the periphery wiring zone 10B comprises a first sub-zone 10B1, a second sub-zone 10B2, a third sub-zone 10B3 and a fourth sub-zone 10B4. The first sub-zone 10B1 and the second sub-zone 10B2 are respectively arranged beside two long sides of the visible touch zone 10A. The third sub-zone 10B3 and the fourth sub-zone 10B4 are respectively arranged beside two short sides of the visible touch zone 10A. The grounding part 14 is included in at least one sub-zone of the first sub-zone 10B1, the second sub-zone 10B2 and the third sub-zone 10B3. The insulation film 15 and the antenna radiation unit 16 are aligned with at least one sub-zone of the first sub-zone 10B1, the second sub-zone 10B2 and the third sub-zone 10B3. Preferably but not exclusively, the insulation film 15 is a flexible circuit board or a transparent film. The antenna radiation unit 16 is made of a metallic conductive material. It is noted that the antenna pattern of the antenna radiation unit 16 is not restricted. Preferably but not exclusively, the antenna radiation unit 16 is formed on the top surface 15a of the insulation film 15 by a metal mesh forming process or a coat printing process.

In this embodiment, the touch panel 1 further comprises at least one coupling part 17. The coupling part 17 is disposed on the transparent substrate 11, and included in the fourth sub-zone 10B4 of the periphery wiring zone 10B. The coupling part 17 is electrically connected with the output terminals of the plural metal traces 13. In this embodiment, the grounding part 14 and the coupling part 17 are included in different sub-zones of the periphery wiring zone 10B.

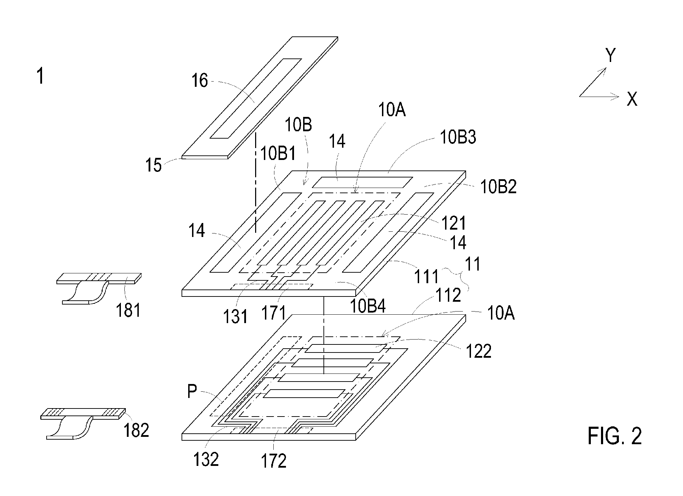

FIG. 2 is a schematic exploded view illustrating the touch panel with the antenna structure as shown in FIG. 1. Referring to FIGS. 1 and 2, the transparent substrate 11 comprises a first transparent film 111 and a second transparent film 112. The touch sensing circuit 12 comprises plural first sensing electrodes 121 and plural second sensing electrodes 122. The plural metal traces 13 comprise plural first metal traces 131 and plural second metal traces 132. Preferably, the first transparent film 111 is the upper transparent film, and the second transparent film 112 is the lower transparent film. The first transparent film 111 and the second transparent film 112 are flexible or inflexible transparent films. The plural first sensing electrodes 121 of the touch sensing circuit 12 are disposed on the first transparent film 111, and included in the visible touch zone 10A. The plural first sensing electrodes 121 are extended along a first direction (e.g., a Y-axis direction), and arranged in parallel with each other. The plural second sensing electrodes 122 of the touch sensing circuit 12 are disposed on the second transparent film 112, and included in the visible touch zone 10A. The plural second sensing electrodes 122 are extended along a second direction (e.g., an X-axis direction), and arranged in parallel with each other. It is noted that the first direction and the second direction are not restricted to the Y-axis direction and the X-axis direction. Moreover, the arrangements and the patterns of the sensing electrodes of the touch sensing circuit 12 may be altered according to the practical requirements.

In this embodiment, the plural first metal traces 131 are disposed on the first transparent film 111, and included in the periphery wiring zone 10B. Preferably, the plural first metal traces 131 are included in the fourth sub-zone 10B4 of the periphery wiring zone 10B. The plural second metal traces 132 are disposed on the second transparent film 112, and included in the periphery wiring zone 10B. Preferably, the plural second metal traces 132 are included in the first sub-zone 10B1 and the second sub-zone 10B2 of the periphery wiring zone 10B. The plural first metal traces 131 are electrically connected with the plural first sensing electrodes 121. The plural second metal traces 132 are electrically connected with the plural second sensing electrodes 122.

In an embodiment, the at least one coupling part 17 comprises a first coupling part 171 and a second coupling part 172. The first coupling part 171 is disposed on the first transparent film 111, and included in the fourth sub-zone 10B4 of the periphery wiring zone 10B. The second coupling part 172 is disposed on the second transparent film 112, and included in the fourth sub-zone 10B4 of the periphery wiring zone 10B. The first coupling part 171 is electrically connected with the output terminals of the plural first metal traces 131. The second coupling part 172 is electrically connected with the output terminals of the plural second metal traces 132. In some embodiments, the touch panel 1 further comprises a first flexible flat cable 181 and a second flexible flat cable 182. The first flexible flat cable 181 is electrically connected with the first coupling part 171. The second flexible flat cable 182 is electrically connected with the second coupling part 172. Consequently, the connection between the coupling parts and the corresponding flexible flat cables can achieve the functions of inputting and outputting signals.

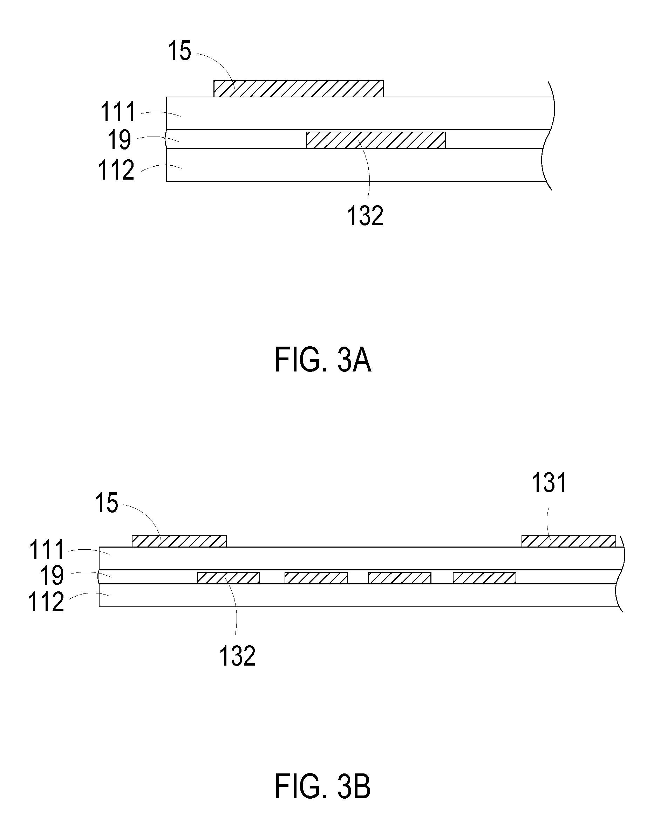

FIG. 3A is a schematic cross-sectional view illustrating the touch panel of FIG. 1 and taken along the line AA. FIG. 3B is a schematic cross-sectional view illustrating the touch panel of FIG. 1 and taken along the line BB. Referring to FIGS. 1, 2, 3A and 3B, in an embodiment according to the present invention, the grounding part 14 is disposed on the first transparent film 111, and included in the first sub-zone 10B1 of the periphery wiring zone 10B. Moreover, the grounding part 14 is aligned with a projection zone P of the second transparent film 112 (see FIG. 2). Some segments of the plural second metal traces 132 are included in the projection zone P. As mentioned above, the grounding part 14 is disposed on the first sub-zone 10B1 of the periphery wiring zone 10B of the first transparent film 111. That is, no metal traces are formed on the first sub-zone 10B1 of the periphery wiring zone 10B of the first transparent film 111. Moreover, the grounding part 14 is disposed over some segments of the plural second metal traces 132 of the second transparent film 112. Consequently, the layout space of the periphery wiring zone 10B is effectively utilized. Moreover, the grounding part 14 can achieve the signal isolation purpose and can be used as the ground terminal of the antenna radiation unit 16. Preferably but not exclusively, the first transparent film 111 and the second transparent film 112 are bonded together through an optical clear adhesive 19.

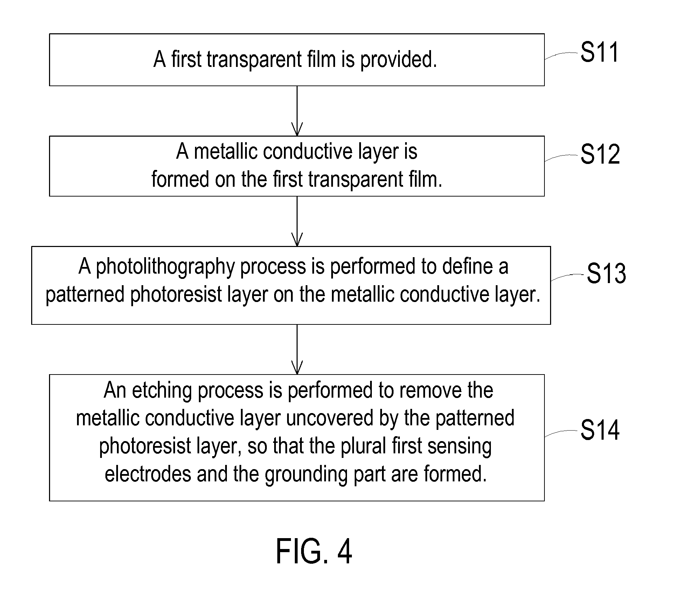

FIG. 4 is a flowchart illustrating a method of fabricating the grounding part and the plural first sensing electrodes of the touch panel as shown in FIG. 2. Referring to FIGS. 1, 2 and 4, in this embodiment according to the present invention, the grounding part 14 and the plural first sensing electrodes 121 are simultaneously formed on the same surface of the first transparent film 111 by the same forming process. The grounding part 14 and the plural first sensing electrodes 121 are made of the same metallic conductive material. That is, the grounding part 14 is constituted by a portion of the metallic conductive material, and the plural first sensing electrodes 121 are constituted by another portion of the metallic conductive material. The fabricating method comprises the following steps. Firstly, in a step S11, a first transparent film 111 is provided. Then, in a step S12, a metallic conductive layer is formed on the surface of the first transparent film 111. Then, in a step S13, a photolithography process is performed to define a patterned photoresist layer on the metallic conductive layer. Then, in a step S14, an etching process is performed to remove the metallic conductive layer uncovered by the patterned photoresist layer. After the remaining patterned photoresist layer is removed, plural first sensing electrodes 121 are formed on the visible touch zone 10A, and the grounding part 14 is formed on at least one sub-zone of the first sub-zone 10B1, the second sub-zone 10B2 and the third sub-zone 10B3. The above method of forming the grounding part 14 and the plural first sensing electrodes 121 on the same surface of the first transparent film 111 by the same forming process is presented herein for purpose of illustration and description only.

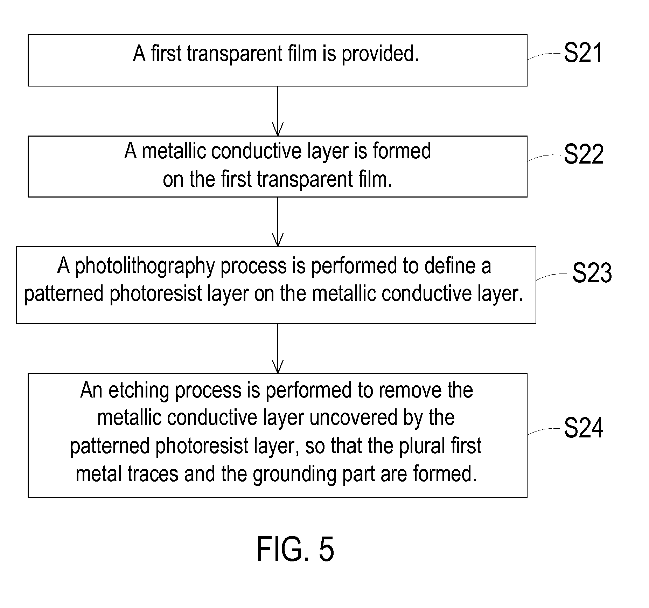

FIG. 5 is a flowchart illustrating a method of fabricating the grounding part and the plural first metal traces of the touch panel as shown in FIG. 2. Referring to FIGS. 1, 2 and 5, in this embodiment according to the present invention, the grounding part 14 and the plural first metal traces 131 are simultaneously formed on the same surface of the first transparent film 111 by the same forming process. The grounding part 14 and the plural first metal traces 131 are made of the same metallic conductive material. That is, the grounding part 14 is constituted by a portion of the metallic conductive material, and the plural first metal traces 131 are constituted by another portion of the metallic conductive material. The fabricating method comprises the following steps. Firstly, in a step S21, a first transparent film 111 is provided. Then, in a step S22, a metallic conductive layer is formed on the surface of the first transparent film 111. Then, in a step S23, a photolithography process is performed to define a patterned photoresist layer on the metallic conductive layer. Then, in a step S24, an etching process is performed to remove the metallic conductive layer uncovered by the patterned photoresist layer. After the remaining patterned photoresist layer is removed, plural first metal traces 131 are formed on the fourth sub-zone 10B4 of the periphery wiring zone 10B, and the grounding part 14 is formed on at least one sub-zone of the first sub-zone 10B1, the second sub-zone 10B2 and the third sub-zone 10B3. The above method of forming the grounding part 14 and the plural first metal traces 131 on the same surface of the first transparent film 111 by the same forming process is presented herein for purpose of illustration and description only.

Alternatively, in a further embodiment, the grounding part 14, the plural first sensing electrodes 121 and the plural first metal traces 131 are simultaneously formed on the same surface of the first transparent film 111 by the same forming process. It is noted that this forming process may be implemented with the metal mesh forming process. The material of the first transparent film 111 and the second transparent film 112 may be selected from polyethylene terephthalate (PET), polyetherimide (PEI), polyphenylensulfone (PPSU), polyimide (PI), polyethylene naphthalate (PEN), cyclic olefin copolymer (COC), liquid crystal polymer (LCP) or a combination thereof. The metallic conductive material of the metal mesh circuit may be selected from copper, gold, silver, aluminum, tungsten, iron, nickel, chromium, titanium, molybdenum, indium, tin or a combination thereof.

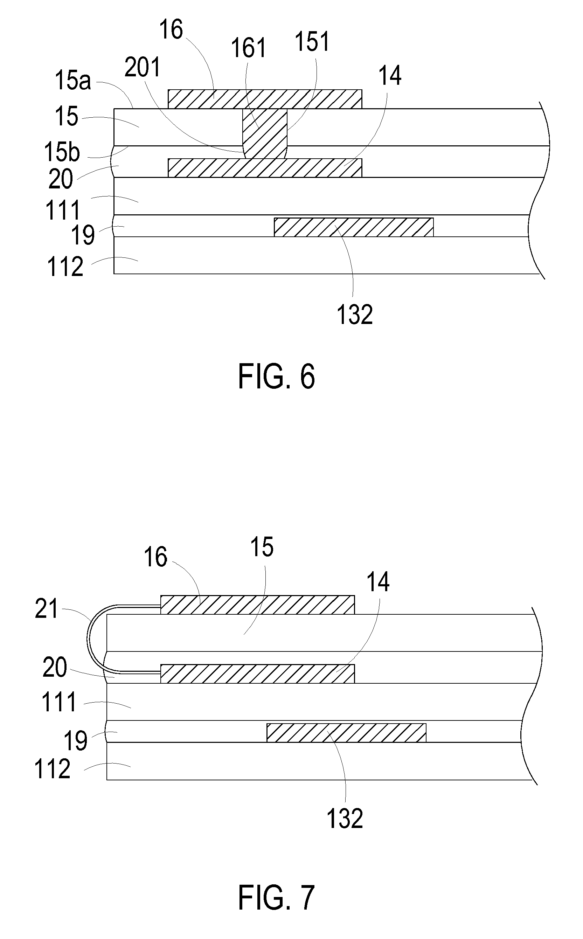

FIG. 6 is a schematic cross-sectional view illustrating an example of the electrical connection between the antenna radiation unit and the grounding part of the touch panel as shown in FIG. 2. Referring to FIGS. 1, 2 and 6, the antenna radiation unit 16 is disposed on the top surface 15a of the insulation film 15. Consequently, a great portion of the antenna radiation unit 16 is separated from the grounding part 14 through the insulation film 15. In this embodiment, the antenna radiation unit 16 further comprises a conducting part 161, and the insulation film 15 comprises a perforation 151. The conducting part 161 of the antenna radiation unit 16 is penetrated through the perforation 151 of the insulation film 15, and partially exposed to the bottom surface 15b of the insulation film 15. The bottom surface 15b of the insulation film 15 and the first transparent film 111 are connected with each other through an optical clear adhesive 20. The optical clear adhesive 20 has a window 201, which is aligned with the grounding part 14. When the bottom surface 15b of the insulation film 15 and the first transparent film 111 are connected with each other through the optical clear adhesive 20, the conducting part 161 of the antenna radiation unit 16 is penetrated through the window 201 of the optical clear adhesive 20 and contacted with the grounding part 14. Consequently, the antenna radiation unit 16 is electrically connected with the grounding part 14.

FIG. 7 is a schematic cross-sectional view illustrating another example of the electrical connection between the antenna radiation unit and the grounding part of the touch panel as shown in FIG. 2. Referring to FIGS. 1, 2 and 7, the antenna radiation unit 16 is disposed on the top surface 15a of the insulation film 15. Consequently, a great portion of the antenna radiation unit 16 is separated from the grounding part 14 through the insulation film 15. In this embodiment, the antenna radiation unit 16 further comprises a cable 21. The bottom surface 15b of the insulation film 15 and the first transparent film 111 are connected with each other through an optical clear adhesive 20. Moreover, the antenna radiation unit 16 is electrically connected with the grounding part 14 through the cable 21.

In some embodiments, the antenna radiation unit 16 further comprises a feeding part (not shown). The feeding part can be electrically connected with a feeding point of a circuit board through an external cable. Alternatively, the feeding part of the antenna radiation unit 16 is integrated with the first coupling part 171 (see FIG. 2) and electrically connected with the circuit board through the first flexible flat cable 181.

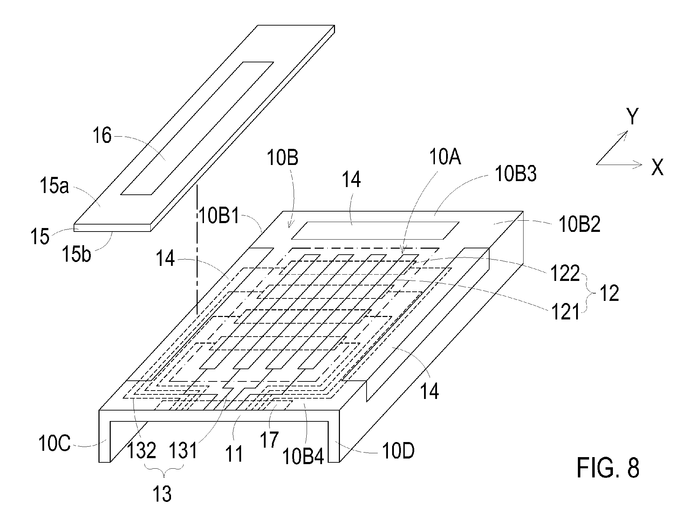

FIG. 8 schematically illustrates a touch panel with an antenna structure according to another embodiment of the present invention. Component parts and elements corresponding to those of FIG. 1 are designated by identical numeral references, and detailed descriptions thereof are omitted. In comparison with the embodiment of FIG. 1, the transparent substrate 11 of the touch panel 1 of this embodiment is a flexible transparent substrate. Moreover, the first sub-zone 10B1 and the second sub-zone 10B2 of the periphery wiring zone 10B are bent downwardly to form a first bent part 10C and a second bent part 10D, respectively. At least a portion of the grounding part 14 is formed on the first bent part 10C and/or the second bent part 10D. Consequently, the width of the grounding part 14 is increased or adjusted according to the practical requirements.

From the above descriptions, the present invention provides the touch panel with the antenna structure. The touch panel is applied to an electronic device with a wireless communication function. Since the grounding part is disposed on the periphery wiring zone of the transparent substrate to isolate signals, the grounding part can be used as a ground terminal of the antenna radiation unit in order to avoid the signal interference problem. Under this circumstance, the touch control performance of the touch panel will be increased, and the performance of the antenna radiation unit to receive and transmit the wireless signals will be enhanced. Moreover, the touch panel of the present invention has light weightiness and reduced thickness, the fabricating process is simplified. In other words, the touch panel of the present invention can provide a touch control function and a function of receiving and transmitting wireless signals without the need of largely increasing the size of the touch panel.

## Claims

1. A touch panel (1) with an antenna structure, the touch panel (1) comprising:
a transparent substrate (11) divided into a visible touch zone (10A) and a periphery wiring zone (10B), wherein the periphery wiring zone (10B) is arranged around the visible touch zone (10A);
a touch sensing circuit (12) disposed on the transparent substrate (11), and included in the visible touch zone (10A);
plural metal traces (13) disposed on the transparent substrate (11), and included in the periphery wiring zone (10B), wherein the plural metal traces (13) are electrically connected with the touch sensing circuit (12);
a grounding part (14) disposed on the transparent substrate (11), and included in the periphery wiring zone (10B);
an insulation film (15) having a top surface (15a) and a bottom surface (15b), wherein the bottom surface (15b) of the insulation film (15) is connected with the periphery wiring zone (10B) of the transparent substrate (11); and
an antenna radiation unit (16) disposed on the top surface (15a) of the insulation film (15), wherein at least a portion of the antenna radiation unit (16) is disposed over the grounding part (14), and electrically connected with the grounding part (14).

2. The touch panel according to claim 1, wherein the touch sensing circuit (12) is a transparent electrode circuit or a metal mesh circuit.

3. The touch panel according to claim 1 or 2, wherein the periphery wiring zone (10B) comprises a first sub-zone (10B1), a second sub-zone (10B2), a third sub-zone (10B3) and a fourth sub-zone (10B4), wherein the first sub-zone (10B1) and the second sub-zone (10B2) are respectively arranged beside two long sides of the visible touch zone (10A), and the third sub-zone (10B3) and the fourth sub-zone (10B4) are respectively arranged beside two short sides of the visible touch zone (10A), wherein the grounding part (14) is included in at least one of the first sub-zone (10B1), the second sub-zone (10B2) and the third sub-zone (10B3).

4. The touch panel according to claim 3, further comprising a coupling part (17), wherein the coupling part (17) is disposed on the transparent substrate (11), and included in the fourth sub-zone (10B4) of the periphery wiring zone (10B), wherein the grounding part (14) and the coupling part (17) are included in different sub-zones of the periphery wiring zone (10B).

5. The touch panel according to claim 3 or 4, wherein the transparent substrate (11) comprises a first transparent film (111) and a second transparent film (112), the touch sensing circuit (12) comprises plural first sensing electrodes (121) and plural second sensing electrodes (122), and the plural metal traces (13) comprise plural first metal traces (131) and plural second metal traces (132), wherein the plural first sensing electrodes (121) are disposed on the first transparent film (111), the plural second sensing electrodes (122) are disposed on the second transparent film (112), and the plural first sensing electrodes (121) and the plural second sensing electrodes (122) are included in the visible touch zone (10A), wherein the plural first metal traces (131) are disposed on the first transparent film (111), the plural second metal traces (132) are disposed on the second transparent film (112), the plural first metal traces (131) are included in the fourth sub-zone (10B4) of the periphery wiring zone (10B), the plural second metal traces (132) are included in the first sub-zone (10B1) and the second sub-zone (10B2) of the periphery wiring zone (10B), and the grounding part (14) is disposed on the first transparent film (111).

6. The touch panel according to claim 5, wherein the grounding part (14) is aligned with a projection zone (P) of the second transparent film (112), wherein some segments of the plural second metal traces (132) are included in the projection zone (P).

7. The touch panel according to claim 5 or 6, wherein the plural first sensing electrodes (121) are extended along a first direction (Y) and arranged in parallel with each other, and the plural second sensing electrodes (122) are extended along a second direction (X) and arranged in parallel with each other, wherein the plural first sensing electrodes (121) and the plural second sensing electrodes (122) are separated from each other.

8. The touch panel according to any of claims 5 to 7, wherein the grounding part (14), the plural first sensing electrodes (121) and/or the plural first metal traces (131) are simultaneously formed on the same surface of the first transparent film (111) by the same forming process.

9. The touch panel according to any of claims 5 to 8, further comprising a first coupling part (171) and a second coupling part (172), wherein the first coupling part (171) is disposed on the first transparent film (111) and included in the fourth sub-zone (10B4) of the periphery wiring zone (10B), the second coupling part (172) is disposed on the second transparent film (112) and included in the fourth sub-zone (10B4) of the periphery wiring zone (10B), the first coupling part (171) is electrically connected with output terminals of the plural first metal traces (131), and the second coupling part (172) is electrically connected with output terminals of the plural second metal traces (132).

10. The touch panel according to any of claims 3 to 9, wherein the transparent substrate (11) is a flexible transparent substrate, and the first sub-zone (10B1) and the second sub-zone (10B2) of the periphery wiring zone (10B) are bent downwardly to form a first bent part (10C) and a second bent part (10D), respectively, wherein at least a portion of the grounding part (14) is formed on the first bent part (10C) and/or the second bent part (10D).

11. The touch panel according to any of the preceding claims, wherein the bottom surface (15b) of the insulation film (15) and the periphery wiring zone (10B) of the transparent substrate (11) are connected with each other through an optical clear adhesive (20).

12. The touch panel according to claim 11, wherein the antenna radiation unit (16) comprises a conducting part (161), and the insulation film (15) comprises a perforation (151), wherein the conducting part (161) of the antenna radiation unit (16) is penetrated through the perforation (151) of the insulation film (15) and partially exposed to the bottom surface (15b) of the insulation film (15), wherein the optical clear adhesive (20) has a window (201) that is aligned with the grounding part (14), and the conducting part (161) of the antenna radiation unit (16) is penetrated through the window (201) of the optical clear adhesive (20) and contacted with the grounding part (14).

13. The touch panel according to any of the preceding claims, wherein the antenna radiation unit (16) is electrically connected with the grounding part (14) through a cable (21).

14. A touch panel (1) with an antenna structure, in particular a touch panel (1) according to any of the preceding claims, the touch panel (1) comprising:
a transparent substrate (11) comprising a first transparent film (111) and a second transparent film (112), wherein the transparent substrate (11) is divided into a visible touch zone (10A) and a periphery wiring zone (10B), and the periphery wiring zone (10B) is arranged around the visible touch zone (10A);
a touch sensing circuit (12) disposed on the transparent substrate (11) and included in the visible touch zone (10A), wherein the touch sensing circuit (12) comprises plural first sensing electrodes (121) and plural second sensing electrodes (122), wherein the plural first sensing electrodes (121) are disposed on the first transparent film (111), the plural second sensing electrodes (122) are disposed on the second transparent film (112);
plural metal traces (13) disposed on the transparent substrate (11) and included in the periphery wiring zone (10B), wherein the plural metal traces (13) comprise plural first metal traces (131) and plural second metal traces (132), wherein the plural first metal traces (131) are disposed on the first transparent film (111), the plural second metal traces (132) are disposed on the second transparent film (112), the plural first metal traces (131) are electrically connected with the plural first sensing electrodes (121), and the plural second metal traces (132) are electrically connected with the plural second sensing electrodes (122);
a grounding part (14) disposed on the first transparent film (111), and included in the periphery wiring zone (10B);
an insulation film (15) disposed over the first transparent film (111); and
an antenna radiation unit (16) disposed on a top surface (15a) of the insulation film (15), wherein at least a portion of the antenna radiation unit (16) is disposed over the grounding part (14), and electrically connected with the grounding part (14).
